# EUROPEAN PATENT SPECIFICATION

(11) **EP 1 571 792 B1**
(45) Date of publication and mention of the grant of the patent: **14.07.2010**
(21) Application number: 05004196.1
(22) Date of filing: 25.02.2005
(51) Int. Cl.: H04L 12/58, H04L 29/06, H04W 84/00

(54) **Multimedia messaging service system and method thereof**
Multimediales Nachrichtendienstsystem und Verfahren dafür
Système de service de messagerie multimédia et procédé pour celui-ci

(30) Priority: 02.03.2004 KR 2004013932
(43) Date of publication of application: 07.09.2005
(73) Proprietor: LG Electronics, Inc., Seoul (KR)
(72) Inventor: Jun, Sung Bae, Seoul (KR)
(74) Representative: Rupprecht, Kay

(56) References cited:
- EP-A- 1 182 600
- WO-A-00/72574
- WO-A-2005/008667
- US-A- 5 771 355
- US-A1- 2001 054 073
- US-A1- 2003 014 430
- ABSTRACT ARTICLE: '3rd Generation Partnership Project; Technical Specification Group Terminals; Multimedia Messaging Service (MMS); Functional description; Stage 2 (Release 6); 3GPP TS 23.140' ETSI STANDARDS vol. 3-T, no. V6.3.0, 01 September 2003, LIS, SOPHIA ANTIPOLIS CEDEX, FRANCE, XP014021928

## Description

### BACKGROUND OF THE INVENTION

### Field of the Invention

The present invention relates to multimedia messaging service, and more particularly, to a multimedia messaging service system and a method thereof capable of effectively operating multimedia messages.

### Description of the Related Art

The document US 2003/014430 A1 discloses an image data management system for managing an original image data file uploaded from a terminal of a client. The conventional system comprises a client terminal having a web browser for accessing a main server. The client terminal is further adapted to generate compressed image data files each obtained from original image data provided by a digital camera. In the prior art, the client terminal is suitable on the one hand to transfer the compressed image data files to the main server and on the other hand to download, from the main server, the compressed image data files and so-called "album files".

Further prior art is know from 3GPP TS 23.140 V6.3.0 (2003-09), "Multimedia Messaging Service (MMS); Functional description, Stage 2 (Release 6)".

Multimedia messaging service (MMS) for transmitting and receiving a variety of media files such as a moving image, a letter, an image, and a sound at a time is drawing attention as a next generation core technology.

The multimedia messaging service is advanced service that allows a mobile terminal such as a personal digital assistant (PDA), a notebook computer, a smart-phone, a camera-phone to provide multimedia messages (for example, a video, an image, a graphic, an animation, an audio) besides a text as well as provide simple text message delivery of a related art (for example, short message service (SMS)).

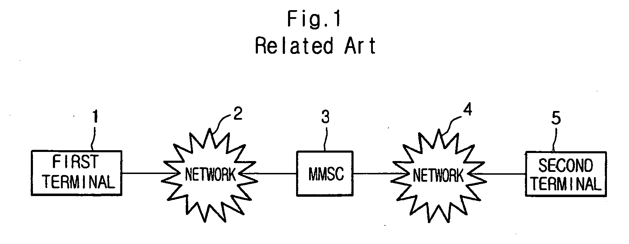

Fig. 1 is a conceptual view of a construction for a multimedia messaging service system of a related art.

Referring to Fig. 1, the multimedia messaging service system of the related art includes: the first terminal 1 for transmitting multimedia messages; the second terminal 5 for receiving the multimedia messages transmitted from the first terminal 1; and a multimedia service center (server) (MMSC or MMS) 3 for temporarily storing the multimedia messages transmitted from the first terminal 1 and transmitting the multimedia messages to the second terminal 5 designated by a caller of the first terminal 1. Further, networks for providing communication (e.g.: wireless application protocol (WAP) gateway) 2 and 4 can be further provided between the first terminal 1 and the MMSC 3, and between the MMSC 3 and the second terminal 5.

The first and the second terminals 1 and 5 are mobile terminals such as a PDA, a notebook computer, a smart-phone, and a camera-phone. The mobile terminals can be equipped with an environment under which the multimedia messages are made, i.e., a software and a hardware.

The multimedia messages can be downloaded from wireless websites connected to other wireless Internet network using the first terminal. Therefore, the caller can edit the downloaded multimedia messages in a desirous manner using the first terminal 1.

The multimedia messages transmitted from the first terminal 1 are provided to the MMSC 3 by way of the network 2. The MMSC 3 can provide the multimedia messages to the second terminal 5 designated by the caller of the first terminal 1 by way of the network 4.

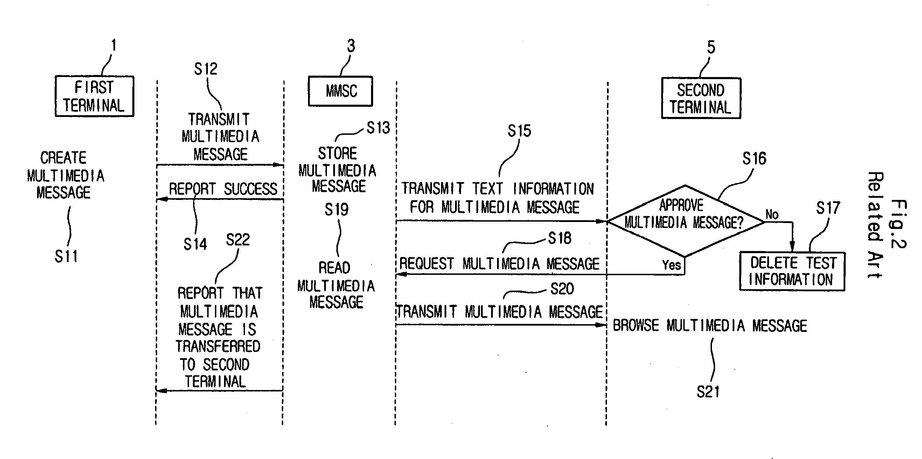

Operation of the multimedia messaging service system having the above-described construction will be described in more detail with reference to Fig. 2.

Fig. 2 is a view illustrating a communication flow in a method for providing multimedia messages in a multimedia messaging service system of a related art.

As illustrated in Fig. 2, the first terminal 1 edits, processes, and makes multimedia messages to be transmitted to the second terminal 5 (S11) and transmits the multimedia messages containing subscriber information of the first and the second terminals 1 and 5 to the MMSC 3 (S12). The subscriber information can be a phone number.

The MMSC 3 temporarily stores the transmitted multimedia messages together with the respective subscriber information of the first and the second terminals 1 and 5 (S13). Simultaneously, the MMSC 3 reports information of successful reception of the multimedia messages to the first terminal 1 (S14).

In the meantime, the MMSC 3 extracts text information, i.e., a person who has sent the message (e.g.: a caller), a message size, a message type from the multimedia messages, and transmits the extracted text information for the multimedia messages to the second terminal 5 (S15).

Accordingly, the text information is browsed on a screen of the second terminal 5 and a receiver of the second terminal 5 can check that the multimedia messages can be sent to his terminal, i.e., the second terminal 5 using the browsed text information.

The second terminal 5 checks whether the multimedia messages are approved by the receiver (S16).

If the receiver rejects an approval of the multimedia messages, the second terminal 5 deletes the text information and thus the multimedia messages stored in the MMSC 3 are not transmitted to the second terminal 5 (S17).

If the receiver approves the multimedia messages, the second terminal 5 requests the MMSC 3 to transmit the multimedia messages (S18). The MMSC 3 reads the temporarily stored multimedia messages and transmits the same to the second terminal 5 in response to the request (S19 and S20).

Accordingly, the second terminal 5 browses the transmitted multimedia messages on the screen so that predetermined multimedia may be played (S21).

In the meantime, the MMSC 3 reports the first terminal 1 that the multimedia messages have been successfully transmitted to the second terminal 5 (S22).

In the above description, the first terminal 1 transmits the multimedia messages and the second terminal 5 receives and browses the multimedia messages, and vice versa. That is, the second terminal 5 can transmit the multimedia messages and the first terminal 1 can receive and browse the multimedia messages. Therefore, a software and a hardware can be so configured as to support so that the first and the second terminals 1 and 5 may make the multimedia messages and also may receive and browse the multimedia messages.

The multimedia messaging service system of the related art operating as described above has advantages of allowing a variety of multimedia information to be transmitted and received to and from the receiver through various methods compared with the SMS based on the simple text.

However, as described in connection with the S15, the multimedia messaging service system provides minimum text information, i.e., a caller, a message size, a message type to the receiver. Thus, the receiver has had a difficulty to determine whether to receive the relevant multimedia messages using only the minimum text information. That is, according to the multimedia messaging service of the related art, the text information does not contain any information as to the multimedia messages and so the receiver cannot effectively determine whether to receive the multimedia messages.

Further, the receiver determines whether to receive the multimedia messages using the minimum text information and receives even unnecessary multimedia messages by mistake, which might have a bad influence on reliability of the multimedia messaging service.

Further, since the receiver frequently receives the unnecessary multimedia messages due to his judgment mistakes, load of the network is increased and the receiver should pay additional service fee for the unnecessary multimedia messages depending on cases.

Therefore, a mechanism capable of operating the multimedia messaging service more effectively is required.

### SUMMARY OF THE INVENTION

Accordingly, the present invention is directed to a multimedia messaging service system and a method thereof that substantially obviate one or more problems due to limitations and disadvantages of the related art.

An object of the present invention is to provide a multimedia messaging service system and a method thereof capable of effectively operating multimedia messages by providing more accurate information for the multimedia messages to a receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a multimedia messaging service method, which includes the steps of: creating, at the first terminal, a summary connotatively expressing multimedia messages from the multimedia messages; transmitting, at the first terminal, the multimedia messages together with the created summary to a multimedia service center (MMSC); transmitting, at the MMSC, the summary to the second terminal; and receiving and browsing, at the second terminal, the multimedia messages with reference to the transmitted summary.

In another aspect of the present invention, there is provided a multimedia messaging service method, which includes the steps of: transmitting, at the first terminal, multimedia messages to a multimedia service center (MMSC); creating, at the MMSC, a summary connotatively expressing the multimedia messages from the transmitted multimedia messages and transmitting, at the MMSC, the created summary to the second terminal; and receiving and browsing, at the second terminal, the multimedia messages with reference to the transmitted summary.

In further another aspect of the present invention, there is provided a multimedia messaging service system, which includes: the first terminal for creating a summary connotatively expressing multimedia messages from the multimedia messages and transmitting the multimedia messages together with the created summary; a multimedia service center (MMSC) for transmitting the summary among the summary and the multimedia messages transmitted from the first terminal; and the second terminal for requesting the MMSC to transmit the multimedia messages with reference to the summary transmitted from the MMSC and browsing the multimedia messages provided from the MMSC in response to the request.

In a still further another aspect of the present invention, there is provided a multimedia messaging service system, which includes: the first terminal for transmitting multimedia messages; a multimedia service center (MMSC) for creating a summary connotatively expressing the multimedia messages from the transmitted multimedia messages from the first terminal and transmitting the same; and the second terminal for requesting the MMSC to transmit the multimedia messages with reference to the summary transmitted from the MMSC and browsing the multimedia messages provided from the MMSC in response to the request.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a conceptual view of a construction for a multimedia messaging service system of a related art;

Fig. 2 is a view illustrating a communication flow in a method for providing multimedia message in a multimedia messaging service system of a related art;

Fig. 3 is a view illustrating a communication flow in a method for providing multimedia messages in a multimedia messaging service system according to a preferred embodiment of the present invention; and

Fig. 4A to 4C are exemplary views illustrating screen configuration and operation for multimedia messaging service using a summary at the second terminal of Fig. 3.

### DETAILED DESCRIPTION OF THE INVENTION

Reference will now be made in detail to the preferred embodiments of the present invention, examples of which are illustrated in the accompanying drawings.

As descried above, the multimedia messaging service of the related art provides the text information for the multimedia messages to the receiver and the receiver determines whether to receive the multimedia messages using the text information for the multimedia messages. In that case, the text information for the multimedia messages contains information such as a sender, a message size, and a message type. Accordingly, since the multimedia messaging service of the related art provides only simple text information for the multimedia messages, it is difficult for the receiver to understand the multimedia messages exactly and the receiver frequently receives unnecessary multimedia messages due to his judgment mistakes.

On the contrary, the multimedia messaging service of the present invention creates a summary most connotatively expressing the multimedia messages and provides the summary to the receiver so that the receiver can judge whether to approve the multimedia messages more accurately. The summary, which is created from the multimedia messages, can be considerably small in its size.

The present invention will be described in more detail with reference to the accompanying drawings.

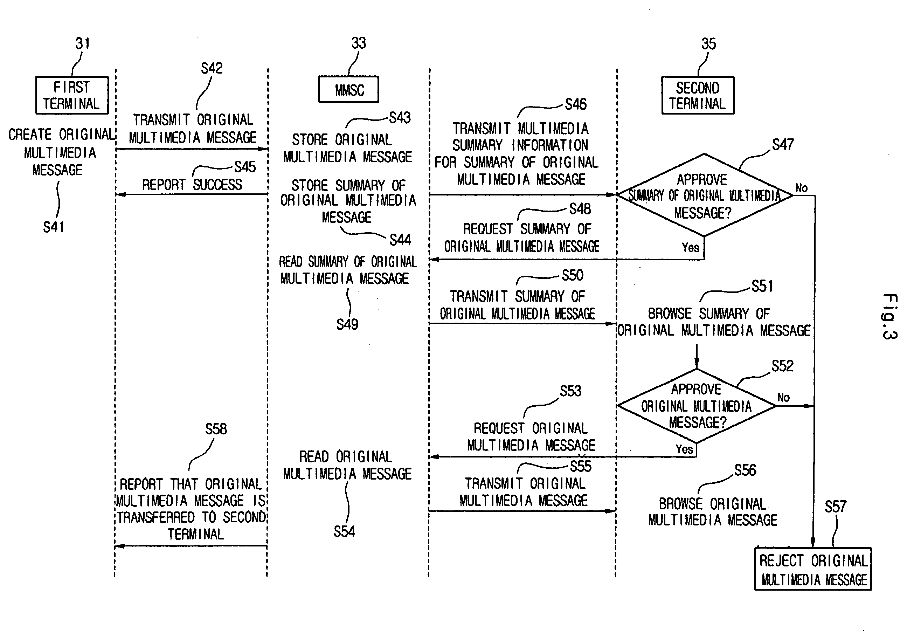

Fig. 3 is a view illustrating a communication flow in a method for providing multimedia messages in a multimedia messaging service system according to a preferred embodiment of the present invention.

A multimedia messaging service system of the present invention can include: the first and the second terminals 31 and 35, and an MMSC 33. Here, the first and the second terminals 31 and 35 are mobile terminals such as a PDA, a notebook computer, a smart-phone, and a camera phone. Environments under which the multimedia messages are made, i.e. a software and a hardware can be supported to these terminals.

A basic system of the present invention is similar to that of the related art. According to the present invention, a means for creating a summary from multimedia messages can be provided to the first terminal 31 or the MMSC 33. For example, in case the means for creating the summary is provided to the first terminal 31, the summary can be created from the multimedia messages in response to a request of a caller. The summary created in this manner can be transmitted to the MMSC 33 together with the multimedia messages. On the contrary, in case the means for creating the summary is provided to the MMSC 33, a summary can be automatically created from multimedia messages when the MMSC 33 receives the multimedia messages.

Referring to Fig. 3, the first terminal 31 edits, processes, and makes original multimedia messages to be transmitted to the second terminal 35 (S41) and transmits the original multimedia messages containing subscriber information of the first and the second terminal 31 and 35 to the MMSC 33 (S42). The reason why a word 'original' is added to the multimedia messages is to discriminate the messages from the 'summary of the multimedia messages' . That is, the original multimedia messages represent messages directly edited and made by a caller of the first terminal 31 and the summary of the multimedia messages represents a summary most connotatively expressing the original multimedia messages. Therefore, the summary can be multimedia data created from the original multimedia messages. A media format of the original multimedia messages can be a text, a graphics, an audio, an image, and a video. On the contrary, a media format of the summary can be the same as or different from the original multimedia messages. The summary can be considerably reduced in its size compared with the original multimedia messages.

A method for creating a summary from original multimedia messages is already well known. For example, an image extraction method, an audio extraction method, a resizing method, and a transcoding method can be used in creating the summary.

In case the media format of the original multimedia messages is made on the basis of an image, the summary can be a thumbnail extracted from the image or a part of the image. In case of the original multimedia messages based on an image, the thumbnail having a smaller size can be extracted using the resizing method. Further, if a partial image of the images is designated using a partial image extraction method, only the relevant part of the image can be extracted.

Further, in case the media format of the original multimedia messages is made on the basis of a video, the summary can be a keyframe extracted from the video, a partial moving image of the video, a small-sized moving image of the video, or a thumbnail of the keyframe. The keyframe is a frame of the video judged important and selected as a representative.

In case the media format of the original multimedia messages is made on the basis of a video that includes an audio, the summary can include only the audio or the audio containing a partial moving image of the video.

The MMSC 33 temporarily stores the original multimedia messages together with the respective subscriber information of the first and the second terminals 31 and 35 from the transmitted original multimedia messages (S43).

Simultaneously, the MMSC 33 creates a summary from the original multimedia messages and temporarily stores the summary (S44). The creation of the summary is performed in the same manner as described above.

Though created at the MMSC 33 according to the present embodiment, the summary can also be created at the first terminal 31 and transmitted to and temporarily stored at the MMSC 33 together with the original multimedia messages.

In other words, the first terminal 31 makes original multimedia messages first, creates a summary from the made original multimedia messages, and transmits the summary and the original multimedia messages simultaneously to the MMSC 33. The MMSC 33 can simultaneously receive and temporarily store the summary and the original multimedia messages.

Description will be made below on the assumption that the summary is created at the MMSC 33 and temporarily stored therein for convenience in description.

When the summary is temporarily stored, the MMSC 33 immediately reports the first terminal 31 that the original multimedia messages have been successfully received (S45).

In the meantime, the MMSC 33 extracts summary information from the summary and transmits the summary information to the second terminal 35 (S46). The summary information can contain a summary type and a summary size.

Though transmitting only the summary information to the second terminal 35 according the preferred embodiment of the present invention, the MMSC 33 can also transmit text information of the original multimedia messages besides the summary information if necessary.

At this point, the transmission can be performed in an order that the text information of the original multimedia messages is transmitted first and the summary information is transmitted subsequently or both the text information of the original multimedia messages and the summary information are simultaneously transmitted.

Accordingly, the second terminal 35 can have a screen for browsing the text information of the original multimedia messages and a screen for browsing the extracted summary information separately, or can have a single screen for simultaneously browsing the text information of the original multimedia messages and the summary information.

Description will be made below on the assumption that the MMSC 33 transmits only the summary information.

The summary information is browsed on the screen of the second terminal 35 and the receiver of the second terminal 35 can check that new multimedia messages have arrived at his terminal through the screen.

The summary information can be transmitted to the second terminal 35 from the MMSC 33 by an explicit or an implicit request from the second terminal 35. That is, if the second terminal 35 explicitly requests the summary information, the MMSC 33 can transmit the summary information to the second terminal 35 in response thereto. On the contrary, if the receiver sets transmission of the summary as a default when setting the second terminal 35, the summary information extracted from the summary can be automatically transmitted to the second terminal 35 when the original multimedia messages are received in the MMSC 33.

The second terminal 35 checks whether transmission of the summary is approved by the receiver who has referred to the summary information (S47).

If the receiver rejects the approval for the transmission of the summary, the second terminal 35 rejects the original multimedia messages and the summary information is deleted and thus the original multimedia messages stored in the MMSC 33 are not transmitted to the second terminal 35 (S57).

If the receiver approves the transmission of the summary, the second terminal 35 requests the MMSC 33 to transmit the summary (S48) and the MMSC 33 reads the summary and transmits the same to the second terminal 35 in response to the request (S49 and S50).

Accordingly, the second terminal 35 browses the transmitted summary on the screen and allows the summary to be played according to a predetermined media format (S51).

At this point, the receiver determines whether to approve the transmission of the original multimedia messages that correspond to the summary with reference to the played summary.

The second terminal 35 checks whether the transmission of the original multimedia messages is approved by the receiver (S52).

If the transmission of the original multimedia messages is not approved but rejected by the receiver, the second terminal 35 rejects the original multimedia messages and deletes the summary in playing and the original multimedia messages stored in the MMSC 33 are not transmitted to the second terminal 35 as described above in connection with the step S57.

On the contrary, if the transmission of the original multimedia messages is approved by the receiver, the second terminal 35 requests the MMSC 33 to transmit the original multimedia messages (S53) and the MMSC 33 reads the original multimedia messages and transmits the same to the second terminal 35 in response to the request (S54 and S55).

Accordingly, the second terminal 35 browses the transmitted original multimedia messages on the screen and allows the original multimedia messages to be played according to a predetermined media format (S56).

In the meantime, the MMSC 33 reports the first terminal 31 that the original multimedia messages have been successfully transmitted to the second terminal 35 (S58).

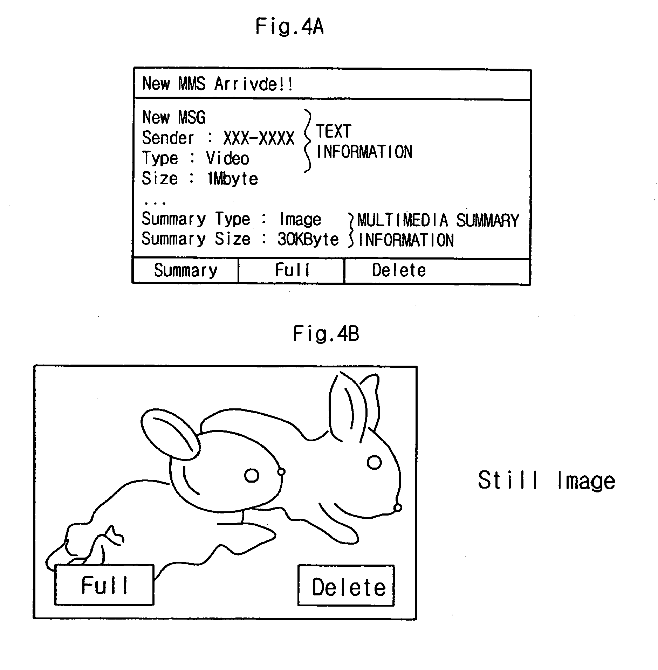

Fig. 4A to 4C are exemplary views illustrating screen configuration and operation for multimedia messaging service using the summary at the second terminal of Fig. 3.

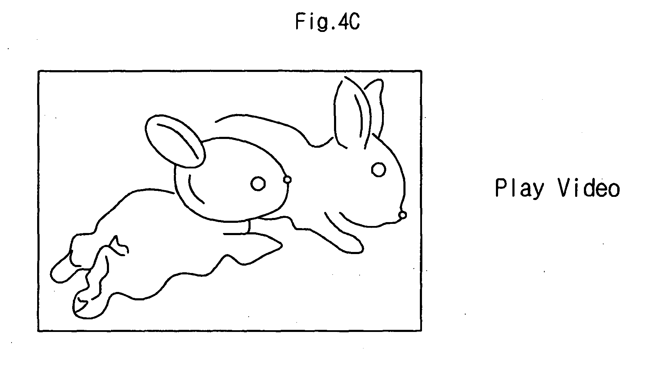

That is, Fig. 4A is an exemplary view illustrating that the text information of the original multimedia messages and the summary information are simultaneously browsed on a single screen, Fig. 4B is an exemplary view illustrating that the summary is played in case the receiver approves the transmission of the summary in Fig. 4A, and Fig. 4C is an exemplary view illustrating that the multimedia messages are played in case the receiver approves the transmission of the original multimedia messages with reference to the summary in playing in Fig. 4B.

Referring to Fig. 4A, if the original multimedia messages are received in the MMSC 33, the text information of the original multimedia messages and the summary information are simultaneously transmitted so that the text information of the original multimedia messages and the summary information can be simultaneously browsed on a single screen of the second terminal 35.

At this point, the text information of the original multimedia messages can contain a sender, a message type, and a message size, and the summary information can contain a summary type, and a summary size.

Of course, referring to Fig. 4A, though the text information of the original multimedia messages and the summary information can be simultaneously browsed, the text information of the original multimedia messages and the summary information can be also independently browsed on separate screens different each other.

Further, only the summary information of the summary can be received in and browsed at the second terminal 35 if necessary.

There can also exit menus regarding approval such as a 'Summary' button, a 'Full' button, and a 'Delete' button on the screen of Fig. 4A. Here, the 'Summary' button is a button used when the receiver requests the summary, the 'Full' button is a button used when the receiver requests the original multimedia messages, and the 'Delete' button is a button used when the receiver rejects the original multimedia messages or the summary.

Therefore, the receiver determines whether to approve the transmission of the summary using the summary information being browsed on the screen of Fig. 4A.

If the receiver presses the 'Summary' button of Fig. 4A in order to approve the transmission of the summary of the original multimedia messages, a request for the summary is transmitted to the MMSC 33, the MMSC 33 transmits the summary to the second terminal 35 in response to the request, and the second terminal 35 receives and plays the summary as illustrated in Fig. 4B. Here, the summary can be played in variety of formats such as a thumbnail, a part of an image, a part of a moving image, a reduced moving image, a keyframe extracted from the thumbnail, and an audio depending on the media format of the original multimedia messages.

Therefore, the receiver can understand the original multimedia messages more accurately using the summary in playing and thus can determine accurately whether to approve the transmission of the original multimedia messages.

That is, in the related art, only the text information of the original multimedia messages has been provided and the receiver has determined whether to approve the transmission of the original multimedia messages using the text information.

On the contrary, according to the present invention, the summary information is provided besides the text information of the original multimedia messages and the summary can be provided using the summary information. At this point, the summary can be provided in form of multimedia that expresses the original multimedia messages more accurately. Therefore, the receiver can determine whether to approve the original multimedia messages using the summary according to the present invention.

Referring to Fig. 4B, the receiver's pressing the 'Full' button on the basis of the summary in playing means that the receiver approves the transmission of the original multimedia messages. Therefore, referring to Fig. 4C, the original multimedia messages are transmitted from the MMSC 33 and played on the screen. At this point, the media format of the original multimedia messages can be a text, a graphics, an audio, an image, and a video.

As described above, the present invention provides the summary besides the text information of the original multimedia messages so that the receiver may judge whether to receive the multimedia messages more accurately. Therefore, the present invention can solve the inconvenience that unnecessary multimedia messages are received due to the receiver's judgment mistakes and also alleviate load applied on the network due to frequent reception of the unnecessary multimedia messages. Further, reliability of the multimedia messaging service can be increased even more.

## Claims

1. A multimedia messaging service method comprising the steps of:
- creating, at a first terminal (31), from multimedia messages, a summary connotatively expressing the multimedia messages;
- transmitting, at the first terminal (31), the multimedia messages together with the created summary to a multimedia service center MMSC (33);
- transmitting, at the MMSC (33), the summary to a second terminal (35); and
- receiving and browsing, at the second terminal (35), the multimedia messages with reference to the transmitted summary.

2. The method according to claim 1, wherein the media format of the multimedia messages is at least one of a text, a graphics, an audio, an image, and a video.

3. The method according to claim 1, wherein the summary is created by at least one of an image extraction method, an audio extraction method, a resizing method, and a transcoding method.

4. The method according to claim1, wherein an image format of the summary is the same as or different from that of the multimedia messages.

5. The method according to claim 4, wherein if the multimedia messages are made of an image, the summary is made using one of a thumbnail extracted from the image or a partial image of the image.

6. The method according to claim 4, wherein if the multimedia messages are made of a video, the summary is made using one of a keyframe extracted as a representative frame of the video, a partial moving image of the video, and a small-sized moving image of the video.

7. The method according to claim 4, wherein if the multimedia messages are made of a video that includes an audio, the summary is made using one of only an audio and a partial moving image of the video having the audio together.

8. The method according to claim 4, wherein the summary and the multimedia messages are temporarily stored in the MMSC (33).

9. The method according to claim 1, wherein the step of transmitting, at the MMSC (33), the summary to the second terminal (35) comprises the steps of:
- extracting, at the MMSC (33), summary information including a summary type and a summary size from the summary and transmitting the extracted summary information to the second terminal (35);
- determining, at the second terminal (35), whether to approve transmission for the summary with reference to the summary information and sending a request to the MMSC (33) when transmission is approved; and
- transmitting, at the MMSC (33), the summary to the second terminal (35) in response to the request.

10. The method according to claim 9, wherein the extracted summary information is transmitted to the second terminal (35) together with the text information of the multimedia messages.

11. The method according to claim 9, wherein the summary information is transmitted in response to an explicit request of the second terminal (35).

12. The method according to claim 9, wherein the summary information is transmitted in response to an implicit request due to a default setting of the second terminal (35).

13. The method according to claim 1, wherein the step of browsing, at the second terminal (35), the multimedia messages comprises the steps of:
- determining, at the second terminal (35), whether to approve transmission of the multimedia messages with reference to the summary and sending a request to the MMSC (33) when transmission is approved;
- transmitting, at the MMSC (33), the multimedia messages in response to the request; and browsing, at the second terminal (35), the multimedia messages.

14. A multimedia messaging service method comprising the steps of:
- transmitting, at a first terminal (31), multimedia messages to a multimedia service center MMSC (33); and
- creating, at the MMSC (33), from the multimedia messages, a summary connotatively expressing the multimedia messages transmitting, at the MMSC (33), the created summary to a second terminal (35); and
- receiving, at the second terminal (35), multimedia messages from the MMSC (33) when an approval of transmission of the multimedia messages is transmitted from the second terminal (35) with reference to the summary,
**characterized in that**
the step of transmitting, at the MMSC (33), the summary to the second terminal (35) comprises the steps of:
- extracting, at the MMSC (33), summary information including a summary type and a summary size from the summary and transmitting the extracted summary information to the second terminal (35);
- determining, at the second terminal (35), whether to approve transmission of the summary with reference to the summary information and sending a request to the MMSC (33) when transmission is approved; and
- transmitting, at the MMSC (33), the summary to the second terminal (35) in response to the request.

15. The method according to claim 14, wherein the media format of the multimedia messages is at least one of a text, a graphics, an audio, an image, and a video.

16. The method according to claim 14, wherein the summary is created by at least one of an image extraction method, an audio extraction method, a resizing method, and a transcoding method.

17. The method according to claim 14, wherein an image format of the summary is the same as or different from that of the multimedia messages.

18. The method according to claim 17, wherein if the multimedia messages are made of an image, the summary is made using one of a thumbnail extracted from the image or a part of the image.

19. The method according to claim 17, wherein if the multimedia messages are made of a video, the summary is made using one of a keyframe extracted as a representative frame of the video, a partial moving image of the video, and a small-sized moving image of the video.

20. The method according to claim 17, wherein if the multimedia messages are made of a video that includes an audio, the summary is made using one of only an audio and a partial moving image of the video having the audio together.

21. The method according to claim 14, wherein the summary and the multimedia messages are temporarily stored in the MMSC (33).

22. The method according to claim 14, wherein the extracted summary information is transmitted to the second terminal (35) together with the text information of the multimedia messages.

23. The method according to claim 14, wherein the summary information is transmitted in response to an explicit request of the second terminal (35).

24. The method according to claim 14, wherein the summary information is transmitted in response to an implicit request due to a default setting of the second terminal (35).

25. The method according to claim 14, wherein the step of browsing, at the second terminal (35), the multimedia messages comprises the steps of:
- determining, at the second terminal (35), whether to approve transmission of the multimedia messages with reference to the summary and requesting the determination results to the MMSC (33);
- transmitting, at the MMSC (33), the multimedia messages in response to the request; and
- browsing, at the second terminal (35), the multimedia messages.

26. A multimedia messaging service system comprising:
- a first terminal (31) for creating, from multimedia messages, a summary connotatively expressing the multimedia messages and transmitting the multimedia messages together with the created summary;
- a multimedia service center MMSC (33) for transmitting the summary among the summary and the multimedia messages transmitted from the first terminal (31); and
- a second terminal (35) for requesting the MMSC (33) to transmit the multimedia messages with reference to the summary transmitted from the MMSC (33) and browsing the multimedia messages provided from the MMSC (33) in response to the request.

27. The system according to claim 26, wherein the summary is created by at least one of an image extraction method, an audio extraction method, a resizing method, and a transcoding method.

28. The system according to claim 26, wherein the MMSC (33) extracts summary information that includes a summary type and a summary size from the summary and transmits the summary information to the second terminal (35) before transmitting the summary.

29. A multimedia messaging service system comprising:
- a first terminal (31) for transmitting multimedia messages; and
- a multimedia service center MMSC (33) for creating, from the multimedia messages, a summary connotatively expressing the multimedia messages transmitted from the first terminal (31) and transmitting the created summary; and
- a second terminal (35) for receiving the multimedia messages from the MMSC (33) when approval of transmission the multimedia messages is transmitted from the second terminal (35) with reference to the summary,
**characterized in that**
the MMSC (33) extracts summary information that includes a summary type and a summary size from the summary and transmits the summary information to the second terminal (35) ;
the second terminal (35) determines whether to approve transmission of the summary with reference to the summary information and sending a request to the MMSC (33) when transmission is approved; and transmitting at the MMSC (33), the summary to the second terminal (35) in response to the request.

30. The system according to claim 29, wherein the summary is created by at least one of an image extraction method, an audio extraction method, a resizing method, and a transcoding method.

## Patentansprüche

1. Multimedia-Nachrichtenübermittlungsdienstverfahren, die Schritte aufweisend:
- Erzeugen, an einem ersten Terminal (31), einer Zusammenfassung aus Multimediamitteilungen, welche die Multimedianachrichten bedeutungsweise ausdrückt,
- Übermitteln, an dem ersten Terminal (31), der Multimedianachrichten zusammen mit der erzeugten Zusammenfassung an ein Multimediaservicezentrum MMSC (33);
- Übermitteln, an dem MMSC (33), der Zusammenfassung an ein zweites Terminal (35); und
- Empfangen und Browsen, am zweiten Terminal (35), der Multimedianachrichten mit Bezug auf die übertragene Zusammenfassung.

2. Verfahren nach Anspruch 1, wobei das Medienformat der Multimedianachrichten mindestens eines eines Textes, einer Grafik, einer Audiodatei, eines Bildes und eines Videos ist.

3. Verfahren nach Anspruch 1, wobei die Zusammenfassung erzeugt wird durch mindestens eines eines Bild-Extraktionsverfahrens, eines Audioextraktionsverfahrens, eines Redimensionierungsverfahrens und eines Umkodierungsverfahrens.

4. Verfahren nach Anspruch 1, wobei ein Bildformat der Zusammenfassung das gleiche ist oder unterschiedlich ist zu dem der Multimedianachrichten.

5. Verfahren nach Anspruch 4, wobei, wenn die Multimedianachrichten aus einem Bild bestehen, die Zusammenfassung unter Verwendung eines eines Miniaturbildes, welches aus dem Bild extrahiert wurde, oder eines Teilbildes des Bildes hergestellt wurde.

6. Verfahren nach Anspruch 4, wobei, wenn die Multimedianachrichten aus einem Video bestehen, die Zusammenfassung hergestellt wird unter Verwendung eines von einem Keyframe, welcher als ein repräsentativer Frame des Videos extrahiert wurde, einem beweglichen Teilbildes des Videos und einem kleindimensionierten beweglichen Bild des Videos.

7. Verfahren nach Anspruch 4, wobei, wenn die Multimedianachrichten aus einem Video hergestellt sind, welches eine Audiodatei enthält, die Zusammenfassung hergestellt wird unter Verwendung eines von nur einer Audiodatei und einem beweglichen Teilbild des Videos, welche die Audiodatei gemeinsam haben.

8. Verfahren nach Anspruch 4, wobei die Zusammenfassung und die Multimedianachrichten vorübergehend in dem MMSC (33) gespeichert werden.

9. Verfahren nach Anspruch 1, wobei der Schritt des Übertragens am MMSC (33) der Zusammenfassung zu dem zweiten Terminal (35) den Schritt aufweist:
- Extrahieren, am MMSC (33), von Zusammenfassungsinformation, welche einen Zusammenfassungstyp und eine Zusammenfassungsgröße enthält von der Zusammenfassung und Übertragen der extrahierten Zusammenfassungsinformation zu dem zweiten Terminal (35);
- Bestimmen, am zweiten Terminal (35), ob der Übertragung der Zusammenfassung zugestimmt werden soll mit Bezug auf die Zusammenfassungsinformation, und Senden einer Anfrage an das MMSC (33), wenn der Übertragung zugestimmt wird; und
- Übertragen, am MMSC (33), der Zusammenfassung zu dem zweiten Terminal (35) als Antwort auf die Anfrage.

10. Verfahren nach Anspruch 9, wobei die extrahierte Zusammenfassungsinformation an das zweite Terminal (35) übertragen wird zusammen mit der Textinformation der Multimedianachrichten.

11. Verfahren nach Anspruch 9, wobei die Zusammenfassungsinformation als Antwort auf eine explizite Anfrage des zweiten Terminals (35) übertragen wird.

12. Verfahren nach Anspruch 9, wobei die Zusammenfassungsinformation übertragen wird als Antwort auf eine implizite Anfrage aufgrund einer Standardeinstellung des zweiten Terminals (35).

13. Verfahren nach Anspruch 1, wobei der Schritt des Browsens, am zweiten Terminal (35), der Multimedianachrichten die Schritte aufweist:
- Bestimmen, am zweiten Terminal (35), ob der Übertragung der Multimedianachrichten mit Bezug auf die Zusammenfassung zugestimmt werden soll, und Senden einer Anfrage an das MMSC (33), wenn der Übertragung zugestimmt wird;
- Übertragen am MMSC (33) der Multimedianachrichten als Antwort auf die Anfrage; und Browsen am zweiten Terminal der Multimedianachrichten.

14. Multimedia-Nachrichtenübermittlungsdienstverfahren, die Schritte aufweisend:
- Übermitteln, an einem ersten Terminal (31), von Multimedianachrichten an ein Multimediaservicezentrum MMSC (33); und
- Erzeugen, am MMSC (33), einer Zusammenfassung aus den Multimedianachrichten, welche bedeutungsweise die Multimedianachrichtenübertragung ausdrückt, Übertragen ,am MMSC (33), der erzeugten Zusammenfassung an ein zweites Terminal (35); und
- Empfangen, am zweiten Terminal (35) von Multimedianachrichten vom MMSC (33), wenn eine Zustimmung der Übertragung der Multimedianachrichten vom zweiten Terminal (35) übertragen wird, mit Bezug auf die Zusammenfassung,
**dadurch gekennzeichnet, dass** der Schritt des Übertragens, am MMSC (33), der Zusammenfassung an das zweite Terminal die Schritte aufweist:
- Extrahieren am MMSC (33) von Zusammenfassungsinformation, welche einen Zusammenfassungstyp und eine Zusammenfassungsgröße einschließt, von der Zusammenfassung und Übertragen der extrahierten Zusammenfassungsinformation an das zweite Terminal (35);
- Bestimmen, am zweiten Terminal (35), ob der Übertragung der Zusammenfassung mit Bezug auf die Zusammenfassungsinformation zugestimmte werden soll, und Senden einer Anfrage an das MMSC (33), wenn der Übertragung zugestimmt wird; und
- Übertragen, am MMSC (33), der Zusammenfassung an das zweite Terminal (35) als Antwort auf die Anfrage.

15. Verfahren nach Anspruch 14, wobei das Medienformat der Multimedianachrichten mindestens eines von einem Text, einer Grafik, einer Audiodatei, eines Bildes und eines Videos ist.

16. Verfahren nach Anspruch 14, wobei die Zusammenfassung erzeugt wird durch mindestens eines von einem Extraktionsverfahren, einem Audioextraktionsverfahren, einem Redimensionierungsverfahren und einem Umkodierungsverfahren.

17. Verfahren nach Anspruch 14, wobei ein Bildformat der Zusammenfassung das gleiche ist oder unterschiedlich ist zu dem der Multimedianachrichten.

18. Verfahren nach Anspruch 17, wobei, wenn die Multimedianachrichten aus einem Bild bestehen, die Zusammenfassung unter Verwendung eines Miniaturbildes, welches aus dem Bild extrahiert wurde, oder einem Teilbild des Bildes hergestellt wird.

19. Verfahren nach Anspruch 17, wobei, wenn die Multimedianachrichten aus einem Video bestehen, die Zusammenfassung hergestellt wird unter Verwendung eines von einem Keyframe, welcher als ein repräsentativer Frame des Videos extrahiert wurde, einem beweglichen Teilbildes des Videos und einem kleindimensionierten beweglichen Bild des Videos.

20. Verfahren nach Anspruch 17, wobei wenn die Multimedianachrichten aus einem Video hergestellt sind, welches eine Audiodatei enthält, die Zusammenfassung hergestellt wird unter Verwendung eines von nur einer Audiodatei und einem beweglichen Teilbild des Videos, welche die Audiodatei gemeinsam haben.

21. Verfahren nach Anspruch 14, wobei die Zusammenfassung und die Multimedianachrichten vorübergehend in dem MMSC (33) gespeichert werden.

22. Verfahren nach Anspruch 14, wobei die extrahierte Zusammenfassungsinformation an das zweite Terminal (35) übertragen wird zusammen mit der Textinformation der Multimedianachrichten.

23. Verfahren nach Anspruch 14, wobei die Zusammenfassungsinformation als Antwort auf eine explizite Anfrage des zweiten Terminals (35) übertragen wird.

24. Verfahren nach Anspruch 14, wobei die Zusammenfassungsinformation übertragen wird als Antwort auf eine implizite Anfrage aufgrund einer Standardeinstellung des zweiten Terminals (35).

25. Verfahren nach Anspruch 14, wobei der Schritt des Browsens, am zweiten Terminal (35), der Multimedianachrichten die Schritte aufweist:
- Bestimmen, am zweiten Terminal (35), ob der Übertragung der Multimedianachrichten mit Bezug auf die Zusammenfassung zugestimmt werden soll, und Anfragen der Bestimmungsergebnisse an das MMSC (33);
- Übertragen, am MMSC (33), der Multimedianachrichten als Antwort auf die Anfrage; und
- Browsen, am zweiten Terminal (35), der Multimedianachrichten.

26. Multimedianachrichtenübermittlungsdienstsystem, aufweisend:
- ein erstes Terminal (31) zum Erzeugen von Multimedianachrichten, einer Zusammenfassung, welche bedeutungsweise die Multimedianachrichten ausdrückt, und Übertragen der Multimedianachrichten zusammen mit der erzeugten Zusammenfassung,
- ein Multimediaservicezentrum MMSC (33) zum Übertragen der Zusammenfassung unter der Zusammenfassung und der Multimedianachrichten vom ersten Terminal (31); und
- ein zweites Terminal (35) zum Anfragen des MMSC (33), um die Multimedianachrichten mit Bezug auf die vom MMSC übertragene Zusammenfassung zu Übertragen, und Browsen der Multimedianachrichten, welche vom MMSC (33) als Antwort auf die Anfrage bereitgestellt werden.

27. System nach Anspruch 26, wobei die Zusammenfassung erzeugt wird durch mindestens eines von einem Bildextraktionsverfahren, einem Audioextraktionsverfahren, einem Redimensionierungsverfahren und einem Umkodierungsverfahren.

28. System nach Anspruch 26, wobei das MMSC (33) Zusammenfassungsinformation extrahiert, welche einen Zusammenfassungstyp und eine Zusammenfassungsgröße der Zusammenfassung aufweist, und die Zusammenfassungsinformation an das zweite Terminal (35) überträgt, bevor die Zusammenfassung übertragen wird.

29. Multimedianachrichtenübermittlungsdienstsystem, aufweisend:
- ein erstes Terminal (31) zum Übertragen von Multimedianachrichten, und
- ein Multimediaservicezentrum MMSC (33) zum Erzeugen einer Zusammenfassung aus den Multimedianachrichten, welche bedeutungsweise die Multimedianachrichten ausdrückt, und Übertragen der Multimedianachrichten vom ersten Terminal (31) und Übertragen der erzeugten Zusammenfassung; und
- ein zweites Terminal (35) zum Empfangen der Multimedianachrichten vom MMSC (33), wenn die Zustimmung zur Übertragung der Multimedianachrichten vom zweiten Terminal (35) mit Bezug auf die Zusammenfassung übertragen wird,
**dadurch gekennzeichnet, dass** das MMSC (33) Zusammenfassungsinformation extrahiert, welche einen Zusammenfassungstyp und eine Zusammenfassungsgröße der Zusammenfassung überträgt, und die Zusammenfassungsinformation zum zweiten Terminal (35) überträgt, wobei das zweite Terminal (35) bestimmt, ob der Übertragung der Zusammenfassung mit Bezug auf die Zusammenfassungsinformation zugestimmt werden soll, und Senden einer Anfrage an das MMSC (33), wenn der Übertragung zugestimmt wird; und
Übertragen am MMSC (33) der Zusammenfassung zum zweiten Terminal (35) als Antwort auf die Anfrage.

30. System nach Anspruch 29, wobei die Zusammenfassung erzeugt wird durch mindestens eines von einem Extraktionsverfahren, einem Audioextraktionsverfahren, einem Redimensionierungsverfahren und einem Umkodierungsverfahren.

## Revendications

1. Procédé de service de messagerie multimédia comprenant les étapes consistant à :
- créer, sur un premier terminal (31), à partir de messages multimédia, un résumé exprimant une connotation aux messages multimédia ;
- transmettre, sur le premier terminal (31), les messages multimédia en association avec le résumé créé à un centre de services multimédia MMSC (33) ;
- transmettre, sur le MMSC (33), le résumé à un second terminal (35) ; et
- recevoir, sur le second terminal (35), les messages multimédia en référence au résumé transmis et naviguer parmi ceux-ci.

2. Procédé selon la revendication 1, dans lequel le format multimédia des messages multimédia est au moins l'un d'un format texte, graphique, audio, image et vidéo.

3. Procédé selon la revendication 1, dans lequel le résumé est créé par au moins l'un d'un procédé d'extraction d'image, d'un procédé d'extraction de contenu audio, d'un procédé de redimensionnement et d'un procédé de transcodage.

4. Procédé selon la revendication 1, dans lequel un format d'image du résumé est identique à, ou différent de celui des messages multimédia.

5. Procédé selon la revendication 4, dans lequel, si les messages multimédia sont constitués d'une image, le résumé est créé en utilisant l'un d'une imagette extraite de l'image ou d'une image partielle de l'image.

6. Procédé selon la revendication 4, dans lequel, si les messages multimédia sont constitués d'un contenu vidéo, le résumé est créé en utilisant l'une d'une image clé extraite en tant qu'image représentative du contenu vidéo, d'une image animée partielle du contenu vidéo, et d'une image animée de petite taille du contenu vidéo.

7. Procédé selon la revendication 4, dans lequel, si les messages multimédia sont constitués d'un contenu vidéo qui comprend un contenu audio, le résumé est créé en utilisant l'un d'un contenu audio seul et d'une image animée partielle du contenu vidéo auquel est associé le contenu audio.

8. Procédé selon la revendication 4, dans lequel le résumé et les messages multimédia sont temporairement stockés sur le MMSC (33).

9. Procédé selon la revendication 1, dans lequel l'étape de transmission, sur le MMSC (33), du résumé au second terminal (35) comprend les étapes consistant à :
- extraire du résumé, sur le MMSC (33), des informations de résumé comprenant un type de résumé et une taille de résumé, et transmettre les informations de résumé extraites au second terminal (35) ;
- déterminer, sur le second terminal (35), s'il faut approuver la transmission du résumé en référence aux informations de résumé et envoyer une demande au MMSC (33) lorsque la transmission est approuvée ; et
- transmettre, sur le MMSC (33), le résumé au second terminal (35) en réponse à la demande.

10. Procédé selon la revendication 9, dans lequel les informations de résumé extraites sont transmises au second terminal (35) en association avec les informations de texte des messages multimédia.

11. Procédé selon la revendication 9, dans lequel les informations de résumé sont transmises en réponse à une demande explicite provenant du second terminal (35).

12. Procédé selon la revendication 9, dans lequel les informations de résumé sont transmises en réponse à une demande implicite due à un réglage par défaut du second terminal (35).

13. Procédé selon la revendication 1, dans lequel l'étape de navigation, sur le second terminal (35), parmi les messages multimédia, comprend les étapes consistant à _{:}
- déterminer, sur le second terminal (35), s'il faut approuver la transmission des messages multimédia en référence au résumé et envoyer une demande au MMSC (33) lorsque la transmission est approuvée ;
- transmettre, sur le MMSC (33), les messages multimédia en réponse à la demande ; et naviguer, sur le second terminal (35), parmi les messages multimédia.

14. Procédé de service de messagerie multimédia comprenant les étapes consistant à :
- transmettre, sur un premier terminal (31), des messages multimédia à un centre de services multimédia MMSC (33) ; et
- créer, sur le MMSC (33), à partir des messages multimédia, un résumé exprimant une connotation aux messages multimédia en transmettant, sur le MMSC (33), le résumé créé à un second terminal (35) ; et
- recevoir, sur le second terminal (35), des messages multimédia en provenance du MMSC (33) lorsqu'une approbation de la transmission des messages multimédia est transmise en provenance du second terminal (35) en référence au résumé,
**caractérisé en ce que**
l'étape consistant à transmettre, sur le MMSC (33), le résumé au second terminal (35) comprend les étapes consistant à _{:}
- extraire du résumé, sur le MMSC (33), des informations de résumé comprenant un type de résumé et une taille de résumé, et transmettre les informations de résumé extraites au second terminal (35) ;
- déterminer, sur le second terminal (35), s'il faut approuver la transmission du résumé en référence aux informations de résumé et envoyer une demande au MMSC (33) lorsque la transmission est approuvée ; et
- transmettre, sur le MMSC (33), le résumé au second terminal (35) en réponse à la demande.

15. Procédé selon la revendication 14, dans lequel le format multimédia des messages multimédia est au moins l'un d'un format texte, graphique, audio, image, et vidéo.

16. Procédé selon la revendication 14, dans lequel le résumé est créé par au moins l'un d'un procédé d'extraction d'image, d'un procédé d'extraction de contenu audio, d'un procédé de redimensionnement et d'un procédé de transcodage.

17. Procédé selon la revendication 14, dans lequel un format d'image du résumé est identique à, ou différent de celui des messages multimédia.

18. Procédé selon la revendication 17, dans lequel, si les messages multimédia sont constitués d'une image, le résumé est créé en utilisant l'une d'une imagette extraite de l'image ou d'une partie de l'image.

19. Procédé selon la revendication 17, dans lequel, si les messages multimédia sont constitués d'un contenu vidéo, le résumé est créé en utilisant l'une d'une image clé extraite en tant qu'image représentative du contenu vidéo, d'une image animée partielle du contenu vidéo, et d'une image animée de petite taille du contenu vidéo.

20. Procédé selon la revendication 17, dans lequel, si les messages multimédia sont constitués d'un contenu vidéo qui comprend un contenu audio, le résumé est créé en utilisant l'un d'un contenu audio seul et d'une image animée partielle du contenu vidéo auquel est associé le contenu audio.

21. Procédé selon la revendication 14, dans lequel le résumé et les messages multimédia sont temporairement stockés sur le MMSC (33).

22. Procédé selon la revendication 14, dans lequel les informations de résumé extraites sont transmises au second terminal (35) en association avec les informations de texte des messages multimédia.

23. Procédé selon la revendication 14, dans lequel les informations de résumé sont transmises en réponse à une demande explicite provenant du second terminal (35).

24. Procédé selon la revendication 14, dans lequel les informations de résumé sont transmises en réponse à une demande implicite due à un réglage par défaut du second terminal (35).

25. Procédé selon la revendication 14, dans lequel l'étape de navigation, sur le second terminal (35), parmi les messages multimédia, comprend les étapes consistant à :
- déterminer, sur le second terminal (35), s'il faut approuver la transmission des messages multimédia en référence au résumé et demander les résultats de la détermination au MMSC (33) ;
- transmettre, sur le MMSC (33), les messages multimédia en réponse à la demande ; et
- naviguer, sur le second terminal (35), parmi les messages multimédia.

26. Système de service de messagerie multimédia comprenant :
- un premier terminal (31) destiné à créer, à partir de messages multimédia, un résumé exprimant une connotation aux messages multimédia et à transmettre les messages multimédia en association avec le résumé créé ;
- un centre de services multimédia MMSC (33) destiné à transmettre le résumé choisi entre le résumé et les messages multimédia transmis par le premier terminal (31) ; et
- un second terminal (35) destiné à demander au MMSC (33) de transmettre les messages multimédia en référence au résumé transmis par le MMSC (33) et à naviguer parmi les messages multimédia fournis par le MMSC (33) en réponse à la demande.

27. Système selon la revendication 26, dans lequel le résumé est créé par au moins l'un d'un procédé d'extraction d'image, d'un procédé d'extraction de contenu audio, d'un procédé de redimensionnement et d'un procédé de transcodage.

28. Système selon la revendication 26, dans lequel le MMSC (33) extrait du résumé des informations de résumé qui comprennent un type de résumé et une taille de résumé et transmet les informations de résumé au second terminal (35) avant de transmettre le résumé.

29. Système de service de messagerie multimédia comprenant :
- un premier terminal (31) destiné à transmettre des messages multimédia ; et
- un centre de services multimédia MMSC (33) destiné à créer à partir des messages multimédia un résumé exprimant une connotation aux messages multimédia transmis par le premier terminal (31) et à transmettre le résumé créé ; et
- un second terminal (35) destiné à recevoir les messages multimédia du MMSC (33) lorsqu'une approbation de la transmission des messages multimédia est transmise par le second terminal (35) en référence au résumé,
**caractérisé en ce que**
le MMSC (33) extrait du résumé des informations de résumé qui contiennent un type de résumé et une taille de résumé et transmet les informations de résumé au second terminal (35) ;
le second terminal (35) détermine s'il faut approuver la transmission du résumé en référence aux informations de résumé et en envoyant une demande au MMSC (33) lorsque la transmission est approuvée ; et
en transmettant, sur le MMSC (33), le résumé au second terminal (35) en réponse à la demande.

30. Système selon la revendication 29, dans lequel le résumé est créé par au moins l'un d'un procédé d'extraction d'image, d'un procédé d'extraction de contenu audio, d'un procédé de redimensionnement et d'un procédé de transcodage.
